(19) Europäisches Patentamt
European Patent Office
Office européen des brevets

(11) **EP 1 389 868 B1**

(12) **EUROPÄISCHE PATENTSCHRIFT**

(45) Veröffentlichungstag und Bekanntmachung des Hinweises auf die Patenterteilung:
**10.12.2008 Patentblatt 2008/50**

(51) Int Cl.:
***H04N 1/047*** *(2006.01)*        ***G02B 26/10*** *(2006.01)*

(21) Anmeldenummer: **03015775.4**

(22) Anmeldetag: **10.07.2003**

(54) **Scanner und Verfahren zum Betreiben eines Scanners**

Scanner and method for operating a scanner

Dispositif d'analyse par balayage et méthode d'operation

(84) Benannte Vertragsstaaten:
**DE FR GB**

(30) Priorität: **12.08.2002 DE 10237384**

(43) Veröffentlichungstag der Anmeldung:
**18.02.2004 Patentblatt 2004/08**

(73) Patentinhaber: **Carl Zeiss Optronics GmbH**
**73447 Oberkochen (DE)**

(72) Erfinder: **Wohlfrom, Josef, Dipl.-Ing. (FH)**
**73447 Oberkochen (DE)**

(74) Vertreter: **Patentanwälte Bressel und Partner**
**Radickestrasse 48**
**12489 Berlin (DE)**

(56) Entgegenhaltungen:
**DE-C- 19 710 714          US-A- 6 107 770**

- **TIETZE U.; SCHENCK C.: "HALBLEITER - SCHALTUNGSTECHNIK." April 2002 (2002-04), SPRINGER VERLAG.; DE , BERLIN , XP002303807 Kapitel 19: Digitale Filter Kapitel 22: Elektronische Regler**

**Beschreibung**

Die Erfindung betrifft einen Scanner mit einer Positions-Regeleinrichtung und ein Verfahren zum Betreiben eines Scanners.

Scanner werden insbesondere zum Gewinnen von Bildinformationen und von anderen über einfallende elektromagnetische Strahlung gewinnbaren Informationen scanbarer Objekte oder Räume mit unterschiedlichen Anforderungen an die Präzision des Scanvorganges benötigt. Für ein relativ unregelmäßiges Scannen reicht es aus, ein bewegliches Teil des Scanners unter Vorgabe einer sich ändernden Führungsgröße lediglich anzusteuern. Wird jedoch eine hohe Präzision des Scanvorganges gefordert, ist es wünschenswert, eine Sollwertabweichung der Position des beweglichen Teils zu ermitteln und ggf. zu korrigieren. Mit einer derartigen Regelung sind jedoch speziell bei Scannern Probleme verbunden.

Zweckmäßigerweise wird bei Scannern ein zeitlicher Verlauf zumindest einer Führungsgröße vorgegeben und in gleicher Weise vielfach wiederholt, insbesondere in gleichen zeitlichen

Abständen (periodisch) wiederholt. Daneben kann es weitere Führungsgrößen oder sich nicht in derselben Weise wiederholende Änderungen der Führungsgröße geben, z. B. um einen Vorschub eines Stellgliedes zwischen zwei Zyklen der Änderung der ersten Führungsgröße und/oder während eines Zyklus vorzunehmen und/oder um einen Offset einer Stellgröße zu verändern.

Regler, die zum Ausregeln einer Sollwertabweichung einer Regelgröße bei Vorliegen einer zeitlich konstanten Führungsgröße ausgestaltet sind, liefern bei sich zeitlich ändernder Führungsgröße nur bei hohen Abtastraten und/oder hoher Regelverstärkung zufriedenstellende Ergebnisse. Damit wird die Regelung jedoch empfindlich für parasitäre Einflüsse und Parameterschwankungen der Regelstrecke, beispielsweise durch Reibung in mechanisch beweglichen Teilen des Scanners und auf Grund von temperaturabhängigen Eigenschaften der Regelstrecke, etwa der Temperaturabhängigkeit von elektrischen Widerständen eines Scanner-Motors.

Ein weiteres Problem bei Scannern besteht darin, dass die Regelstrecke auf Grund der Zeitkonstanten des Scanner-Motors träge ist und daher nur mit Verzögerung auf ein Stellsignal anspricht. Die Regelstrecke hat daher Tiefpasscharakteristik. Andererseits werden bei Reglern mit Vorteil inverse oder näherungsweise inverse Modelle der Regelstrecke angewendet, die in dem hier vorliegenden Fall folglich Hochpasscharakteristik haben würden. Damit wären hohe Verstärkungen eines Messrauschens im Regelkreis und anderer Störsignale verbunden.

DE 197 10 714 C1 beschreibt ein Verfahren zur Bewegung eines Gegenstandes, insbesondere zur Steuerung einer periodischen Bewegung eines Reflektorelements, wie z. B. eines Galvanometerspiegels zur schritt- oder rasterartigen Ablenkung eines Laser-Abtaststrahls. Das Dokument beschreibt ferner Vorrichtungen zur Implementierung des Verfahrens. Der in dem Dokument beschriebenen Lösung liegt die Idee zugrunde, einen Gegenstand periodisch so zu bewegen, dass sich eine Ortskoordinate des Gegenstandes entsprechend einer Führungsfunktion ändert, die sich aus einer Zielfunktion durch Parametrisierung mit Zielparametern mittels Reihenentwicklung und anschließende Optimierung der Zielparameter zur Bildung der Führungsfunktion mit einer endlichen Zahl von Führungsparametern ergibt.

US 6,107,770 beschreibt ein spezielles Scanner-System mit einer oszillierenden Masse, die zu einer gegen-oszillierenden Masse verbunden ist. Dementsprechend gibt es zwei Antriebsmotoren, die Drehmomente auf die Massen übertragen.

Das Buch mit dem Titel "Halbleiter-Schaltungstechnik" von U. Tietze und C. Schenk, April 2002, Springer-Verlag, beschreibt in Kapitel 19 digitale Filter und in Kapitel 22 elektronische Regler.

Aufgabe der Erfindung ist es, einen Scanner mit einer Positions-Regeleinrichtung und ein Verfahren zum Betreiben eines Scanners anzugeben, die einen Scanvorgang mit hoher Präzision und Regelmäßigkeit ermöglichen.

Die Aufgabe wird durch einen Scanner mit den Merkmalen des Patentanspruchs 1 beziehungsweise durch ein Verfahren zum Betreiben eines Scanners mit den Merkmalen des Patentanspruchs sieben gelöst.

Es wird vorgeschlagen, einen Regler zu verwenden, der zum Ausregeln einer Sollwertabweichung einer Regelgröße bei Vorliegen einer zeitlich konstanten Führungsgröße ausgestaltet ist, und damit eine Korrektureinrichtung zum Korrigieren eines Regelfehlers des Reglers zu kombinieren. Die Korrektureinrichtung korrigiert den Regelfehler des Reglers, der auf Grund einer sich in gleicher Weise wiederholenden zeitlichen Änderung eines Sollwertes der Regelgröße entsteht.

Bei dem Scanner können der Regler und die Korrektureinrichtung voneinander getrennte Signaleingänge jeweils zum Empfang eines Eingangsignals aufweisen, wobei die Eingangsignale jeweils die Sollwertabweichung, eine äquivalente Größe oder eine daraus abgeleitete Größe wiedergeben. Es wird weiter vorgeschlagen, dass eine Kombinationseinrichtung zum Kombinieren von Ausgangssignalen des Reglers und der Korrektureinrichtung vorgesehen ist, wobei die Kombinationseinrichtung eingangsseitig mit einem Signalausgang des Reglers und einem Signalausgang der Korrektureinrichtung sowie ausgangsseitig mit einer Stelleinrichtung zum Einstellen einer Position eines beweglichen Teils des Scanners verbunden ist.

Bei dem erfindungsgemäßen Verfahren wird der Regelfehler des Reglers korrigiert, indem eine Sollwertabweichung der Position des beweglichen Teils oder eine äquivalente Größe ausgewertet wird, daraus ein Korrektursignal gewonnen wird und ein Ausgangssignal des Reglers unter Verwendung des Korrektursignals verändert wird.

Die Erfindung ermöglicht es, einen beliebigen Regler zu verwenden. Dies kann ein konventioneller Regler sein, der nur dafür ausgelegt ist, eine Sollwertabweichung einer Regelgröße bei Vorliegen einer zeitlich konstanten Führungsgröße auszuregeln. Der Regler kann aber auch ein anderer Regler sein. Ferner ist es auf Grund der außerhalb des Reglers vorgenommenen Korrektur des Regelfehlers möglich, mit moderaten Abtastraten, geringen Regelverstärkungen und/oder beliebigen geeigneten Modellen der Regelstrecke zu arbeiten. Der'Regler kann daher unempfindlich gegen parasitäre Einflüsse, Parameterschwankungen und/oder Störsignale ausgelegt werden.

Die Sollwertabweichung wird über zumindest einen Zyklus der Änderung der Führungsgröße ausgewertet und ein daraus gewonnener Verlauf des Korrektursignals wird für die Korrektur des Regelfehlers in zumindest einem späteren Zyklus der Änderung der Führungsgröße verwendet. Bei dem Scanner kann hierfür die Korrektureinrichtung ein Finite Impulse Response Filter (FIR-Filter) aufweisen, das einen Signaleingang aufweist, der mit dem Signaleingang der Korrektureinrichtung verbunden oder mit diesem identisch ist. Eine Mehrzahl von Korrekturwerten, insbesondere ein vollständiger Satz für einen kompletten Zyklus, wird in einer Speichereinrichtung gespeichert, vorzugsweise in einem Ringspeicher.

Dem liegt der Gedanke zugrunde, dass der Regelfehler eines Reglers, der auf Grund einer sich in gleicher Weise wiederholenden Änderung der Führungsgröße entsteht, reproduzierbar ist. Dies gilt bei Reglereinstellungen mit guter Dämpfung selbst bei Auftreten von parasitären Einflüsse, Parameterschwankungen und/oder Störsignalen näherungsweise sogar für den gesamten Regelfehler.

Um die bereits durch das FIR-Filter erzeugte Verzögerung, falls erforderlich, auf den Abstand der Zyklen anzupassen, wird vorgeschlagen, ein Verzögerungsglied in Reihe zu dem FIR-Filter zu schalten. Bei sich periodisch wiederholenden Zyklen reicht es aus, eine Verzögerungszeit des Verzögerungsgliedes einmalig so einzustellen oder zu wählen, dass die Summe der beiden Verzögerungszeiten gleich der Periodenlänge ist.

Vorzugsweise ist eine zweite Kombinationseinrichtung zum Kombinieren, insbesondere Summieren, eines Ausgangssignals der Speichereinrichtung mit einem Ausgangssignal einer Ermittlungseinrichtung zur Ermittlung der Korrektur vorgesehen. Jeweils ein Eingang der zweiten Kombinationseinrichtung ist mit einem Ausgang der Speichereinrichtung bzw. einem Ausgang der Ermittlungseinrichtung verbunden. Weiterhin ist ein Ausgang der zweiten Kombinationseinrichtung mit einem Eingang der Speichereinrichtung verbunden. Insbesondere mit einer derartigen Anordnung können die Korrekturwerte von Zyklus zu Zyklus verbessert und an eventuelle Änderungen der Eigenschaften und/oder Einstellungen der Regelstrecke angepasst werden.

Ist die Kombinationseinrichtung als Summiereinrichtung ausgestaltet, ist diese Struktur einem digitalen Integrator vergleichbar. Die Struktur wird im Folgenden als Zyklusintegrator bezeichnet, wenn Korrekturwerte mindestens für einen vollständigen Zyklus gespeichert sind bzw. werden.

Der Scanner mit Zyklusintegrator hat den Vorteil, dass periodische Folgen von Führungssignalen selbst dann fehlerfrei umgesetzt werden können, wenn die Regelstrecke ein nichtlineares Stellverhalten hat, beispielsweise dadurch, dass das Ansprechverhalten des Scanner-Motors von der momentanen Position des Motors abhängt. Ein derartiges nichtlineares Stellverhalten wiederholt sich in gleicher Weise in jedem Zyklus. Der entsprechende Regelfehler kann daher kompensiert werden.

Insbesondere bei dem Zyklusintegrator, aber auch ganz generell, sofern die Korrektureinrichtung ein integrierendes Verhalten aufweist, wird bevorzugt, dass die Sollwertabweichung wiederholt über jeweils einen Zyklus der Änderung der Führungsgröße ausgewertet wird und jeweils aus einem der Zyklen Korrektursignal gewonnen werden, mit denen der Regelfehler nur teilweise kompensierbar ist, insbesondere die Sollwertabweichung nur auf einen Bruchteil der Sollwertabweichung des Zyklus reduzierbar ist. Aufgrund des integrierenden Verhaltens wird der verbleibende Regelfehler von Zyklus zu Zyklus weiter verringert.

Diese Ausgestaltung hat den Vorteil, dass nicht periodische Störsignale nur abgeschwächt in die Korrektur eingehen. Bei der Einstellung des Grades der Kompensation bzw. Korrektur, die in dem nächstfolgenden Zyklus erreicht werden soll, ist daher ein Kompromiss zwischen der Störanfälligkeit und der Schnelligkeit der Reaktion auf Regelfehler zu finden. Insbesondere kann der Grad durch Einstellen der Ermittlungseinrichtung zur Ermittlung von Korrekturwerten, z. B. des FIR-Filters, eingestellt werden.

Ein Nachteil eines integrierenden Verhaltens der Korrektureinrichtung besteht darin, dass Sprungstellen im Verlauf der sich ändernden Führungsgröße, welche aufgrund einer Stellbegrenzung der Stelleinrichtung nicht ausgeregelt werden können, am Ausgang der Korrektureinrichtung endlos anwachsend zu einer Übersteuerung führen. Zur Lösung dieses Problems wird vorgeschlagen, zwischen dem Ausgang der Speichereinrichtung und dem zugeordneten Eingang der zweiten Kombinationseinrichtung ein Tiefpassfilter, insbesondere ein nicht kausales Tiefpassfilter, anzuordnen. Eine derartige Anordnung führt deshalb zu einem guten Korrekturergebnis, weil die in der Speichereinrichtung gespeicherten Korrekturwerte bereits aus einem vergangenen Zyklus stammen. Damit wird zwar das integrierende Verhalten aufgehoben. Jedoch kann durch zusätzliche Maßnahmen, nämlich durch Berücksichtigung der Aussteuerbarkeit der Regelstrecke bei der Erzeugung der Führungssignale, durch numerisch exakte Erzeugung der Führungssignale und durch Wahl einer schwachen Tiefpasswirkung des Tiefpassfilters, näherungsweise ein integrierendes Verhalten erzielt werden.

Eine Weiterbildung des Scanners bzw. des Verfahrens zum Betreiben eines Scanners betrifft den Fall, dass ein Anteil des Führungssignals bzw. ein weiteres Führungssignal an einem Eingang der Positions-Regeleinrichtung sich nicht wiederholt in gleicher Weise ändert. Es wird vorgeschlagen, diesen Anteil bzw. das weitere Führungssignal zwar dem Regler zuzuführen, jedoch nicht der Korrektureinrichtung. Dies kann beispielsweise dadurch erreicht werden, dass zwischen dem Eingang der Positions-Regeleinrichtung und dem Signaleingang der Korrektureinrichtung eine Eliminierungs-Einrichtung zur Eliminierung dieses Anteils bzw. dieses Führungssignals angeordnet wird.

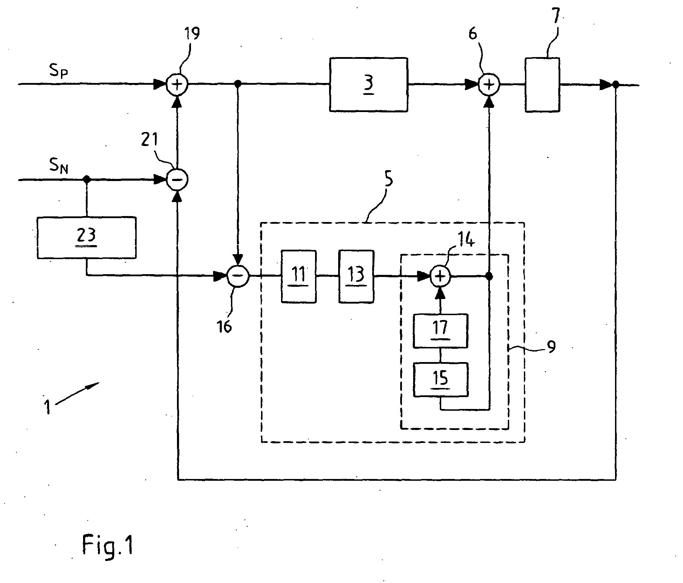

Im Folgenden wird die Erfindung anhand von Ausführungsbeispielen näher erläutert. Ein Ausführungsbeispiel ist in Fig. 1, der einzigen Figur der beigefügten Zeichnung, schematisch dargestellt.

Fig. 1 zeigt ein regelungstechnisches Schaltbild einer Positions-Regeleinrichtung mit Regelstrecke eines Scanners.

Ein sich periodisch änderndes Führungssignal $S_P$ und ein sich in anderer Weise änderndes Führungssignal $S_N$ liegen an separaten Eingängen der Positions-Regeleinrichtung 1 an.

Beispielsweise ist der Scanner an oder in einem Fahrzeug angeordnet und dient der Erstellung eines Infrarotbildes der Umgebung des Fahrzeuges. Hierzu weist der Scanner zumindest ein drehbewegliches Element zur Reflexion einfallender Infrarotstrahlung auf, dessen Drehstellung über einen Motorantrieb einstellbar ist.

Insbesondere weist der zeitliche Verlauf des Führungssignals $S_P$ eine sägezahnartige Form mit linear ansteigenden Sägezahn-Kanten auf. Dem entspricht in dem Beispiel eine wiederholte Drehbewegung des drehbeweglichen Elements mit konstanter Winkelgeschwindigkeit über einen definierten DrehwinkelBereich.

Das Führungssignal $S_N$ wird in einer nicht vorhersehbaren Weise geändert und/oder an den Eingang der Positions-Regeleinrichtung 1 angelegt. In obigem Beispiel wird das Führungssignal $S_N$ z. B. dazu verwendet, Bewegungen des Fahrzeuges während der Fahrt auszugleichen, sodass weiterhin etwa derselbe Bereich der Umgebung des Fahrzeuges gescant wird.

Die Positions-Regeleinrichtung 1 weist einen konventionellen Regler 3 auf. Eingangsseitig ist der Regler 3 mit einer Summiereinrichtung 19 verbunden. Zwischen der Summiereinrichtung 19 und dem Regler 3 befindet sich eine Abzweigung, an der eine Signalleitung zu einer Subtraktionseinrichtung 16 abzweigt. Die Subtraktionseinrichtung 16 ist mit einem Signaleingang einer Korrektureinrichtung 5 verbunden.

Der Eingang, an dem das Führungssignal $S_P$ anliegt, ist mit einem Eingang der Summiereinrichtung 19 verbunden. Der Eingang, an dem das Führungssignal $S_N$ anliegt, ist mit einem Eingang einer Subtraktionseinrichtung 21 verbunden. Ein Ausgang der Subtraktionseinrichtung 21 ist mit einem weiteren Eingang der Summiereinrichtung 19 verbunden. Ein weiterer Eingang der Subtraktionseinrichtung 21 ist mit einem Signalausgang einer Regelstrecke 7 verbunden, sodass ein Ausgangssignal der Positions-Regeleinrichtung 1 rückführbar ist.

Auf der Eingangseite der Subtraktionseinrichtung 21 befindet sich eine Abzweigung, an der das Führungssignal $S_N$ in Richtung eines Filters 23 abgezweigt wird. Ein Ausgang des Filters 23 ist mit einem weiteren Eingang der Subtraktionseinrichtung 16 verbunden.

Die Korrektureinrichtung 5 weist ein Verzögerungsglied 11 auf, deren Signaleingang mit dem Signaleingang der Korrektureinrichtung 5 verbunden ist. Ein Signalausgang des Verzögerungsgliedes 11 ist mit einem Eingang eines Filters 13 verbunden. Das Filter 13 ist in diesem Ausführungsbeispiel ein Finite Impulse Response Filter (FIR-Filter).

Ein Ausgang des Filters 13 ist wiederum mit einem Eingang eines Zyklusintegrators 9 verbunden. Der Zyklusintegrator 9 weist einen Ringspeicher 15, ein Tiefpassfilter 17 und eine Summiereinrichtung 14 auf. Der Eingang des Zyklusintegrators 9 ist mit einem Eingang der Summiereinrichtung 14 verbunden. Ein weiterer Eingang der Summiereinrichtung 14 ist mit einem Ausgang des Tiefpassfilters 17 verbunden. Ein Ausgang der Summiereinrichtung 14 ist mit einer Verzweigung verbunden, an der sich eine Signalleitung in Richtung eines Eingangs einer Summiereinrichtung 6 und in Richtung eines Eingangs des Ringspeichers 15 verzweigt.

Die Summiereinrichtung 6 weist einen weiteren Eingang auf, der mit einem Ausgang des Reglers 3 verbunden ist. Ein Ausgang der Summiereinrichtung 6 ist mit einem Eingang der Regelstrecke 7 verbunden.

Im Folgenden wird nun die Funktionsweise der Regelung beschrieben:

Das vom Ausgang der Regelstrecke 7 rückgeführte Ausgangssignal der Regelstrecke 7 wird von dem zumindest zeitweise an der Subtraktionseinrichtung 21 anliegenden Führungssignal $S_N$ abgezogen. Das resultierende Signal wird an der Summiereinrichtung 19 zu dem Führungssignal $S_P$ hinzu addiert. Das Additionssignal gibt die momentane Sollwertabweichung der Regelstrecke 7 wieder. Der Regler 3 gibt ein entsprechendes Stellsignal zu der Summiereinrichtung 6 aus.

An der Subtraktionseinrichtung 16 wird von dem Additionssignal ein Ausgangssignal des Filters 23 abgezogen. Das Filter 23 filtert das Führungssignal $S_N$ mit der Übertragungsfunktion

$$F_k \; = \; 1 \; / \; ( \; 1 \; + \; F_r \; * \; F_s \; ),$$

wobei $F_r$ eine genäherte signaltechnische Übertragungsfunktion des Reglers 3 und $F_S$ eine genäherte signaltechnische Übertragungsfunktion der Regelstrecke 7 ist. Durch die Filterung und die Subtraktion an der Subtraktionseinrichtung 16 wird im Ergebnis das Führungssignal $S_N$ (näherungsweise) aus dem Additionssignal eliminiert. Daher steht der Korrektureinrichtung 5 eine entsprechend modifizierte Sollwertabweichung mit lediglich periodischen Anteilen der Führungssignale als Eingangssignal zur Verfügung. Das daraus berechenbare Korrektursignal kann also auch in Zyklen verwendet werden, in denen kein Führungssignal $S_N$ oder ein anderes Führungssignal $S_N$ am Eingang der Positions-Regeleinrichtung 1 anliegt.

Das Eingangssignal der Korrektureinrichtung 5 wird zunächst in dem Verzögerungsglied 11 so verzögert, dass die am Ausgang des Filters 13 erzielte Gesamt-Verzögerung genau einer Periodenlänge des Führungssignals $S_P$ entspricht. Das am Eingang des Filters 13 anliegende Signal kann in dem Filter 13 diversen Operationen unterzogen werden. Insbesondere kann die Amplitude des Signals um einen konstanten Faktor reduziert werden, um die bereits oben im allgemeinen Teil der Beschreibung beschriebene nur teilweise Kompensation des Regelfehlers zu erreichen.

Bei einer alternativen Ausgestaltung ist das Verzögerungsglied nicht vor sondern hinter dem Filter 13 angeordnet. Auch ist es möglich, eine Mehrzahl von Verzögerungsgliedern vor und/oder hinter dem Filter 13 anzuordnen.

Bei der in Fig. 1 dargestellten Ausgestaltung liegt am Ausgang des Filters 13 ein aus der Sollwertabweichung abgeleitetes Korrektursignal an. In dem zweiten Zyklus seit Betriebsbeginn oder seit einem Zurücksetzen der Positions-Regeleinrichtung 1 kann das Korrektursignal unmittelbar zur Korrektur des am Ausgang des Reglers 3 anliegenden Stellsignales verwendet werden. In diesem Zyklus ist der Ringspeicher 15 noch leer bzw. sind die gespeicherten Korrekturwerte gleich null, sodass durch die Summiereinrichtung 14 keine Veränderung an dem Ausgangssignal des Filters 13 vorgenommen wird.

In dem zweiten Zyklus und in allen folgenden Zyklen werden jedoch dem Ausgangssignal der Summiereinrichtung 14 entsprechende Korrekturwerte in dem Ringspeicher 15 abgelegt, die zur Korrektur in jeweils folgenden Zyklen zur Verfügung stehen und nach der Filterung in dem Tiefpassfilter 17 durch die Summiereinrichtung 14 zu dem Ausgangsignal des Filters 13 hinzu addiert werden.

Das jeweilige Ausgangssignal der Summiereinrichtung 14 wird der Summiereinrichtung 6 zugeführt und dort zu dem Stellsignal am Ausgang des Reglers 3 hinzu addiert. Es entsteht ein korrigiertes Stellsignal, das einer nicht dargestellten Stelleinrichtung der Regelstrecke 7 zugeführt wird.

**Patentansprüche**

1. Scanner mit einer Positions-Regeleinrichtung (1), die Folgendes aufweist:

   - einen Regler (3), der zum Ausregeln einer Sollwertabweichung einer Regelgröße ausgestaltet ist,
   - eine Korrektureinrichtung (5) zum Korrigieren eines Regelfehlers des Reglers (3), der auf Grund einer zeitlichen Änderung des Sollwertes der Regelgröße entsteht,
   - eine Stelleinrichtung zum Einstellen einer Position eines beweglichen Teils des Scanners,

   wobei der Regler (3) und die Korrektureinrichtung (5) voneinander getrennte Signaleingänge jeweils zum Empfang eines Eingangssignals aufweisen, wobei eine Kombinationseinrichtung (6) zum Kombinieren von Ausgangssignalen des Reglers (3) und der Korrektureinrichtung (5) zu einem Kombinationssignal vorgesehen ist, wobei die Kombinationseinrichtung (6) eingangsseitig mit einem Signalausgang des Reglers (3) und einem Signalausgang der Korrektureinrichtung (5) sowie ausgangsseitig mit der Stelleinrichtung verbunden ist und wobei die Korrektureinrichtung (5) eine Speichereinrichtung (15) zum Speichern einer Mehrzahl von Korrekturwerten zur Korrektur einer Ausgangsgröße des Reglers (3) aufweist.

2. Scanner nach Anspruch 1, wobei die Korrektureinrichtung (5) ein Finite Impulse Response Filter (FIR-Filter) (13) aufweist, das einen Signaleingang aufweist, der mit dem Signaleingang der Korrektureinrichtung (5) verbunden oder mit diesem identisch ist.

3. Scanner nach Anspruch 2, wobei zwischen dem Signaleingang der Korrektureinrichtung (5) und dem Signalausgang der Korrektureinrichtung (5) ein Verzögerungsglied (11) in Reihe zu dem FIR-Filter (13) geschaltet ist.

4. Scanner nach einem der Ansprüche 1 bis 3, der eine Ermittlungseinrichtung zum Ermitteln eines Korrekturwertes aufweist und der eine zweite Kombinationseinrichtung (14) zum Kombinieren eines Ausgangssignals der Speichereinrichtung (15) mit einem Ausgangssignal der Ermittlungseinrichtung aufweist, wobei jeweils ein Eingang der zweiten Kombinationseinrichtung (14) mit einem Ausgang der Ermittlungseinrichtung bzw. einem Ausgang der Speichereinrichtung (15) verbunden ist und wobei ein Ausgang der zweiten Kombinationseinrichtung (14) mit einem Eingang der Speichereinrichtung (15) verbunden ist.

5. Scanner nach einem der Ansprüche 1 bis 4, wobei zwischen den Ausgang der Speichereinrichtung (15) und den damit verbundenen Eingang der zweiten Kombinationseinrichtung (14) ein Tiefpassfilter (17) geschaltet ist.

6. Scanner nach einem der Ansprüche 1 bis 5, wobei zwischen einen Signaleingang der Positions-Regeleinrichtung (1) für Führungssignale ($S_P$, $S_N$) und den Signaleingang der Korrektureinrichtung (5) eine Eliminierungs-Einrichtung (16, 23) zur Eliminierung von Anteilen ($S_N$) der Führungssignale ($S_P$, $S_N$), die sich nicht in der gleichen Weise wiederholt ändern, geschaltet ist.

7. Verfahren zum Betreiben eines Scanners, wobei eine Position eines beweglichen Teils des Scanners unter Vorgabe einer Führungsgröße, die sich wiederholt in gleicher Weise ändert, eingestellt wird, wobei ein der Führungsgröße entsprechendes Führungssignal einem Regler (3) zugeführt wird, wobei der Regler (3) zum Ausregeln einer Sollwertabweichung bei Vorliegen einer zeitlich konstanten Führungsgröße ausgestaltet ist und wobei ein Regelfehler des Reglers (3), der auf Grund der Änderung der Führungsgröße entsteht, korrigiert wird, indem

- eine Sollwertabweichung der Position des beweglichen Teils oder eine äquivalente Größe ausgewertet wird,
- daraus ein Korrektursignal gewonnen wird und
- ein Ausgangssignal des Reglers (3) unter Verwendung des Korrektursignals verändert wird,

und wobei die Sollwertabweichung über zumindest einen Zyklus der Änderung der Führungsgröße ausgewertet wird und ein daraus gewonnener Verlauf des Korrektursignals für die Korrektur des Regelfehlers in zumindest einem späteren Zyklus der Änderung der Führungsgröße verwendet wird.

8. Verfahren nach Anspruch 7, wobei die Sollwertabweichung wiederholt über jeweils einen Zyklus der Änderung der Führungsgröße ausgewertet wird und wobei jeweils aus einem der Zyklen Korrektursignale gewonnen werden, mit denen der Regelfehler nur teilweise kompensierbar ist.

9. Verfahren nach Anspruch 8, wobei die Sollwertabweichung mit den Korrektursignalen nur auf einen Bruchteil der Sollwertabweichung des Zyklus reduzierbar ist.

**Claims**

1. Scanner comprising a position control device (1) which exhibits the following:

- a controller (3) which is constructed for correcting a setpoint deviation of a controlled variable,
- a correction device (5) for correcting a control error of the controller (3) which arises from a change in the setpoint of the controlled variable with time,
- an actuating device for adjusting a position of a moving part of the scanner,

wherein the controller (3) and the correction device (5) exhibit mutually separate signal inputs in each case for receiving an input signal, there being provided a combination device (6) for combining output signals of the controller (3) and of the correction device (5) to form a combination signal, wherein the combination device (6) is connected at its input to a signal output of the controller (3) and to a signal output of the correction device (5) and at its output to the actuating device, and wherein the correction device (5) exhibits a storage device (15) for storing a plurality of correction values for correcting an output variable of the controller (3).

2. Scanner according to claim 1, wherein the correction device (5) exhibits a finite impulse response (FIR) filter (13) which exhibits a signal input which is connected to or is identical to the signal input of the correction device (5).

3. Scanner according to claim 2, wherein a delay element (11) is connected in series with the FIR filter (13) between the signal input of the correction device (5) and the signal output of the correction device (5).

4. Scanner according to one of claims 1 to 3, which exhibits a determining device for determining a correction value and which exhibits a second combination device (14) for combining an output signal of the storage device (15) with an output signal of the determining device, wherein in each case an input of the second combination device (14) is connected to an output of the determining device or, respectively, to an output of the storage device (15) and wherein an output of the second combination device (14) is connected to an input of the storage device (15).

5. Scanner according to one of claims 1 to 4, wherein a low-pass filter (17) is connected between the output of the storage device (15) and the input, connected thereto, of the second combination device (14).

6. Scanner according to one of claims 1 to 5, wherein an elimination device (16, 23) for eliminating components ($S_N$) of the reference signals ($S_P$, $S_N$), which do not change repeatedly in the same manner, is connected between a signal input of the position control device (1) for reference signals ($S_P$, $S_N$) and the signal input of the correction device (5).

**7.** Method for operating a scanner, wherein a position of a moving part of the scanner is adjusted by inputting a reference variable which changes repeatedly in the same manner, wherein a reference signal corresponding to the reference variable is supplied to a controller (3), wherein the controller (3) is constructed for correcting a setpoint deviation in the presence of a reference variable which is constant in time and wherein a control error of the controller (3) which arises from the change in the reference variable is corrected by

   - evaluating a setpoint deviation of the position of the moving part or an equivalent variable,
   - obtaining from this a correction signal and
   - changing an output signal of the controller (3) by using the correction signal,

and wherein the setpoint deviation is evaluated over at least one cycle of the change in the reference variable and a variation, obtained from this, of the correction signal is used for correcting the control error in at least one later cycle of the change in the reference variable.

**8.** Method according to claim 7, wherein the setpoint deviation is repeatedly evaluated over in each case one cycle of the change in the reference variable and wherein in each case correction signals by means of which the control error can only be partially compensated are obtained from one of the cycles.

**9.** Method according to claim 8, wherein the setpoint deviation can only be reduced to a fraction of the setpoint deviation of the cycle using the correction signals.

**Revendications**

**1.** Dispositif d'analyse par balayage avec un dispositif de réglage de position (1), qui présente les éléments suivants :

   - un régulateur (3), qui est conçu pour compenser un écart de valeur de consigne d'une grandeur réglée,
   - un dispositif de correction (5) servant à corriger une erreur de réglage du régulateur (3), qui se produit en raison d'une modification temporelle de la valeur de consigne de la grandeur réglée,
   - un dispositif de réglage servant à régler une position d'une pièce mobile du dispositif d'analyse par balayage,

dans lequel le régulateur (3) et le dispositif de correction (5) présentent des entrées de signaux séparées les unes des autres, respectivement pour la réception d'un signal d'entrée, dans lequel est prévu un dispositif de combinaison (6) servant à combiner des signaux de sortie du régulateur (3) et du dispositif de correction (5) en un signal de combinaison, dans lequel le dispositif de combinaison (6) est relié côté entrée à une sortie de signal du régulateur (3) et à une sortie de signal du dispositif de correction (5) ainsi que côté sortie au dispositif de réglage et dans lequel le dispositif de correction (5) présente un dispositif de mémoire (15) servant à mettre en mémoire une pluralité de valeurs de correction pour la correction d'une grandeur de sortie du régulateur (3).

**2.** Dispositif d'analyse par balayage selon la revendication 1, dans lequel le dispositif de correction (5) présente un filtre à réponse impulsionnelle finie (filtre RIF) (13), qui présente une entrée de signal, qui est reliée à l'entrée de signal du dispositif de correction (5) ou est identique à celle-ci.

**3.** Dispositif d'analyse par balayage selon la revendication 2, dans lequel un élément de retard (11) est monté en série avec le filtre RIF (13) entre l'entrée de signal du dispositif de correction (5) et la sortie de signal du dispositif de correction (5).

**4.** Dispositif d'analyse par balayage selon l'une quelconque des revendications 1 à 3, qui présente un dispositif de détermination servant à déterminer une valeur de correction et qui présente un deuxième dispositif de combinaison (14) servant à combiner un signal de sortie du dispositif de mémoire (15) avec un signal de sortie du dispositif de détermination, dans lequel respectivement une entrée du deuxième dispositif de combinaison (14) est reliée à une sortie du dispositif de détermination et/ou à une sortie du dispositif de mémoire (15) et dans lequel une sortie du deuxième dispositif de combinaison (14) est reliée à une entrée du dispositif de mémoire (15).

**5.** Dispositif d'analyse par balayage selon l'une quelconque des revendications 1 à 4, dans lequel un filtre passe-bas (17) est monté entre la sortie du dispositif de mémoire (15) et l'entrée reliée à celle-ci du deuxième dispositif de combinaison (14).

**6.** Dispositif d'analyse par balayage selon l'une quelconque des revendications 1 à 5, dans lequel un dispositif d'élimination (16, 23) servant à éliminer des parties ($S_N$) des signaux de commande ($S_P$, $S_N$), qui ne changent pas de manière identique de façon répétée, est monté entre une entrée de signal du dispositif de réglage de position (1) pour signaux de commande ($S_P$, $S_N$) et l'entrée de signal du dispositif de correction (5).

**7.** Procédé pour faire fonctionner un dispositif d'analyse par balayage, dans lequel une position d'une pièce mobile du dispositif d'analyse par balayage est réglée en spécifiant une grandeur de commande, qui change de façon répétée de manière identique, dans lequel un signal de commande correspondant à la grandeur de commande est amené à un régulateur (3), dans lequel le régulateur (3) est conçu pour compenser un écart de valeur de consigne en présence d'une grandeur réglée constante dans le temps et dans lequel une erreur de réglage du régulateur (3), qui se produit en raison de la modification de la grandeur de commande, est corrigée, par le fait que

- un écart de valeur de consigne de la position de la pièce mobile ou une grandeur équivalente est exploité,
- un signal de correction en est extrait et
- un signal de sortie du régulateur (3) est modifié en utilisant le signal de correction,

et dans lequel l'écart de valeur de consigne est exploité sur au moins un cycle de la modification de la grandeur de commande et une courbe du signal de correction qui en est extraite est utilisée pour la correction de l'erreur de réglage dans au moins un cycle ultérieur de la modification de la grandeur de commande.

8. Procédé selon la revendication 7, dans lequel l'écart de valeur de consigne est exploité de façon répétée sur respectivement un cycle de la modification de la grandeur de commande et dans lequel des signaux de correction, avec lesquels l'erreur de réglage ne peut être compensée que partiellement, sont extraits respectivement d'un des cycles.

9. Procédé selon la revendication 8, dans lequel l'écart de valeur de consigne ne peut être réduit avec les signaux de correction qu'à une fraction de l'écart de valeur de consigne du cycle.

Fig.1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19710714 C1
- US 6107770 A

### In der Beschreibung aufgeführte Nicht-Patentliteratur

- Halbleiter-Schaltungstechnik. Springer-Verlag, April 2002